# EUROPÄISCHE PATENTSCHRIFT

(11) **EP 3 312 484 B1**
(45) Veröffentlichungstag und Bekanntmachung des Hinweises auf die Patenterteilung: **09.12.2020**
(21) Anmeldenummer: 17196852.2
(22) Anmeldetag: 17.10.2017
(51) Int. Cl.: F16K 31/06, B60T 8/36, H01F 7/08

(54) **SCHALTVENTIL MIT AUFPRALLDÄMPFUNG**
SWITCHING VALVE WITH IMPACT ABSORPTION
ACTUATEUR POURVU D'AMORTISSEMENT DE CHUTE

(30) Priorität: 20.10.2016 DE 102016119990
(43) Veröffentlichungstag der Anmeldung: 25.04.2018
(73) Patentinhaber: RAPA Automotive GmbH & Co. KG, 95100 Selb (DE)
(72) Erfinder: SCHIEWECK, Werner, 95199 Thierstein (DE); GREINER, Herwig, 95339 Neuenmarkt (DE); ZEUG, Christoph, 91052 Erlangen (DE)
(74) Vertreter: Klunker IP Patentanwälte PartG mbB

(56) Entgegenhaltungen:
- DE-A1-102010 038 900
- DE-A1-102011 078 102
- DE-A1-102015 100 182
- US-A1- 2005 001 183

## Beschreibung

Die vorliegende Erfindung betrifft ein elektrisch oder elektromagnetisch betätigtes Ventil, insbesondere zur Anwendung in Luftfedersystemen von Kraftfahrzeugen.

Elektrisch oder elektromagnetisch betätigte Schaltventile umfassen unter anderem die im weiteren Verlauf genauer beschriebenen Bauelemente. Insbesondere umfasst ein solches Ventil eine bewegliche Baugruppe mit einem Magnetanker, welcher in einer Ventilhülse entlang einer Achse beweglich ist, wobei in einer ersten Position mindestens ein Durchfluss freigegeben wird, der in der zweiten Position gesperrt ist. Dazu ist der Magnetanker mit einem Dichtelement gekoppelt, welches mit einem Ventilsitz zusammenwirkt. Der Magnetanker wird durch Bestromung einer Spule, welche die Ventilhülse umgibt, bewegt.

Ventile der vorgenannten Art werden zu unterschiedlichsten Zwecken eingesetzt. Sie kommen zum Beispiel in Luftfedersystemen von Kraftfahrzeugen in verschiedener Weise und für verschiedene Funktionen zum Einsatz. Es existieren beispielsweise Ventile zum Befüllen und Entleeren der Luftfederbälge, Ventile zum Zuschalten oder Sperren von Speichern im System, sowie Ventile, über welche die Balgvolumina mit Zusatzvolumen bei Bedarf verbunden werden können. Bevorzugt werden solche Ventile elektromagnetisch betätigt, so auch das in der DE 10 2011078102 A1 beschriebene Sitzventil.

Für das dynamische Verhalten des Kraftfahrzeugs ist eine kurze Schaltzeit nötig, welche eine hohe Schalt- und Aufprallgeschwindigkeit der beweglichen Bauteile beziehungsweise Dichtelemente nach sich zieht. Bekannte Ventile wurde daher mit Dämpfungselementen versehen, welche den Aufprall der beweglichen Bauteile gegen die stationären Teile dämpft. Das in der DE 10 2011 078 102 A1 beschriebene Sitzventil weist beispielsweise solche Dämpfungselemente auf, die einen Aufprall des Magnettankers auf ein Polteil dämpfen. Der Schaltvorgang des Ventils ist jedoch trotz Aufpralldämpfelementen akustisch wahrnehmbar. Bisher wurde dieses Schaltgeräusch von Motorgeräuschen des Verbrennungsmotors kaschiert. Diese Kaschierung wird aber beispielsweise durch die aktuelle Implementierung von Immissionsschutzmaßnahmen, wie Start-Stopp-Automatik, Hybridantriebe oder Elektrofahrzeuge reduziert, wodurch das Schaltgeräusch in den Vordergrund tritt und für die Fahrzeuginsassen hörbar ist.

DE 10 2010 038 900 A1 offenbart ein Ventil, welches ein Dämpfungselement zum Abbremsen der Bewegung des Magnetankers aufweist. Das Dämpfungselement ist um den Magnetanker herum in einem Strömungspfad zwischen zwei Volumen auf gegenüberliegenden Seiten des Magnetankers angeordnet. Es ist zwischen zwei Endanschlägen axial verlagerbar, wobei die Dämpfungswirkung abhängig von der Position des Dämpfungselements zwischen den Endanschlägen ist. Eine ähnliche Anordnung weist das Ventil aus US 2005/001183 A1 auf.

DE 10 2015 100 182 A1 offenbart einen Elektromagneten mit einem axial beweglichen Anker. Ein ringförmiges Dichtelement ist um den Magnetanker herum angeordnet, um die Volumen auf den gegenüberliegenden Seiten des Magnetankers gegeneinander abzudichten und so die Bewegung des Magnetankers abzubremsen. Es ist ferner ein Stößel vorgesehen, welcher sich von dem Magnetanker erstreckt und dichtend in einer Bohrung geführt ist.

Aufgabe der vorliegenden Erfindung ist es daher, ein Ventil vorzuschlagen, welches einen hohen Durchflussquerschnitt mit einer schnellen Schaltzeit aufweist und dabei akustisch unauffällig ist.

Diese Aufgabe wird erfindungsgemäß durch ein elektrisch oder elektromagnetisch betätigtes Ventil mit den Merkmalen des unabhängigen Anspruchs 1 gelöst. In davon abhängigen Ansprüchen sind vorteilhafte Ausgestaltungen und Weiterbildungen der Erfindung angegeben.

Der Magnetanker, welcher Teil der beweglichen Baugruppe des Ventils ist, definiert in der Ventilhülse ein erstes Volumen auf einer ersten axialen Seite des Magnetankers und ein zweites Volumen auf einer der ersten axialen Seite gegenüberliegenden zweiten axialen Seite des Magnetankers. Um die Bewegung der beweglichen Baugruppe abzudämpfen, umfasst das Ventil ein in radialer Richtung elastisches Drosselelement, das derart zwischen dem ersten und zweiten Volumen angeordnet ist, dass es bei axialer Bewegung der beweglichen Baugruppe einen Fluidstrom zwischen dem ersten und zweiten Volumen drosselt.

Durch die Drosselung des Fluidstroms zwischen den beiden Volumina in der Ventilhülse durch das Drosselelement entsteht bei Bewegung der beweglichen Baugruppe in dem in Bewegungsrichtung vorne angeordneten Volumen ein Überdruck, welcher die Bewegung in der entsprechenden Richtung abbremst. Insbesondere wenn der Magnetanker von Luft umgegeben ist, wird die Luft in dem entsprechenden Volumen komprimiert. Gleichzeitig entsteht in dem in Bewegungsrichtung hinten angeordneten Volumen ein Unterdruck, welcher ebenfalls zum Abbremsen der beweglichen Baugruppe beiträgt. Es entsteht eine schaltwegabhängige Abbremsung der Bewegung, wodurch die Aufprallgeschwindigkeit des Magnetankers oder anderer Teile der beweglichen Baugruppe gegen stationäre Teile des Ventils verlangsamt und damit ein Geräusch reduziert oder vermieden wird. Aufgrund der Drosselung und der Komprimierung der Luft wird die bewegliche Baugruppe erst gegen Ende der Bewegung kurz vor dem Aufprall stark abgebremst, wodurch sich der benötigte Strom zum Bewegen der beweglichen Baugruppe nur unwesentlich erhöht. Wenn die bewegliche Baugruppe stillsteht, erfolgt vorzugsweise ein Druckausgleich zwischen den beiden Volumina.

In einer bevorzugten Ausgestaltung umfasst das Drosselelement zumindest eine umlaufende Dichtung, wie eine Ringdichtung, in einem Spalt zwischen dem Magnetanker und der Ventilhülse. Vorzugsweise ist das Drosselelement in der beweglichen Baugruppe enthalten, insbesondere entlang eines Umfangs des Magnetankers angeordnet, beispielsweise in einer umlaufenden Nut in dem Magnetanker. Es versteht sich, dass das Drosselelement alternativ oder gegebenenfalls zusätzlich auch im stationären Teil des Ventils, insbesondere in der Ventilhülse angeordnet sein kann. Es können auch mehrere Drosselelemente vorgesehen sein, welche in axialer Richtung nacheinander auf dem Umfang des Magnetankers und/oder in der Ventilhülse angeordnet sind.

Vorzugsweise ist zumindest ein Durchgang vorgesehen, welcher bei axialer Bewegung der beweglichen Baugruppe einen Fluidstrom zwischen dem ersten und zweiten Volumen erlaubt. Dies ist insbesondere dann vorteilhaft, wenn das Drosselelement eine Dichtung, wie eine umlaufende Ringdichtung, umfasst, welche das erste und das zweite Volumen gegeneinander abdichtet und einen Fluidstrom, d.h. einen Druckausgleich zwischen den beiden Volumina im Wesentlichen vollständig verhindern würde. Da die Bremswirkung in diesem Fall gegebenenfalls zu hoch sein kann, ist es vorteilhaft, die Drosselwirkung durch einen entsprechenden Durchgang zu verringern. Der Durchgang ist vorzugsweise in dem Drosselelement angeordnet. Er kann beispielsweise zumindest einen Schlitz in der umlaufenden Dichtung umfassen, was auch für die Montage des Drosselelements auf dem Umfang des Magnetankers vorteilhaft sein kann. Alternativ können auch mehrere Durchgänge oder anders ausgebildet Durchgänge oder Öffnungen vorgesehen sein. Alternativ oder zusätzlich kann auch zumindest ein Durchgang in dem Magnetanker vorgesehen sein, welcher zum Druckausgleich das erste und zweite Volumen miteinander verbindet. Falls zumindest ein Durchgang im Magnetanker ausgebildet ist, kann die Dichtung umlaufend vollständig geschlossen sein.

Gemäß einer bevorzugten Ausgestaltung ist das Drosselelement derart angeordnet und ausgebildet, dass es bei Bewegung der beweglichen Baugruppe in einer ersten axialen Richtung eine größere Drosselwirkung entfaltet als bei einer Bewegung der beweglichen Baugruppe in einer der ersten axialen Richtung entgegengesetzten zweiten axialen Richtung. Die Drosselwirkung in der zweiten axialen Bewegungsrichtung kann beispielsweise weniger als die Hälfte, weniger als ein Drittel oder auch weniger als 10 % der Drosselwirkung in der ersten Bewegungsrichtung sein. Vorzugsweise entfaltet das Drosselelement bei einer Bewegung in der zweiten axialen Richtung im Wesentliche keine Drosselwirkung. Insbesondere ist es vorteilhaft, wenn das Drosselelement beim Einschalten des Ventils, d.h. bei Bestromung der Spule, eine hohe Drosselwirkung aufweist, da hier die bewegliche Baugruppe mit einer hohen Geschwindigkeit bewegt wird, um eine kurze Schaltzeit zu ermöglichen. Ein Geräusch durch ein ungedämpftes Aufprallen wäre daher beim Einschalten besonders groß. Dagegen ist beim Ausschalten des Ventils, wobei die bewegliche Baugruppe beispielsweise durch Federkraft zurück in seine Ausgangsposition bewegt wird, ein Abbremsen nicht unbedingt von Nöten. Hier kann die Drosselwirkung gering sein oder ganz entfallen.

Das Drosselelement kann zumindest eine Dichtlippe umfassen, beispielsweise eine Dichtlippe mit einem V-Profil, welches in einer axialen Richtung geöffnet ist. Eine solche Dichtung wird auch V-Dichtung oder V-Ring genannt. Vorteilhaft ist das V-Profil der Dichtlippe derart ausgerichtet, dass sich die Dichtlippe bei einer durch eine Bestromung des Ventils erzeugten axialen Bewegung der beweglichen Baugruppe, d.h. beim Einschalten des Ventils, aufspreizt. Mit anderen Worten, durch Aufspreizung des V-Profils der Dichtlippe wird beim Einschalten des Ventils eine verstärkte Drosselwirkung erreicht, was aus den oben genannten Gründen vorteilhaft sein kann. Beim Ausschalten dagegen kann sich das V-Profil der Dichtlippe zusammenfalten, so dass in dieser Bewegungsrichtung eine geringere oder im Wesentlichen keine Drosselwirkung durch das Drosselelement erzeugt wird. Es versteht sich, dass der Begriff "V-Profil" allgemein Profile mit zumindest zwei Schenkeln umfasst, die eine Aufspreizung des Profils erlauben, wie beispielsweise auch U-förmige Profile. Unabhängig von seiner Form kann das Drosselelement beispielsweise PTFE oder andere geeignete Kunststoffe umfassen

Erfindungsgemäß umfasst die bewegliche Baugruppe des Weiteren einen Stößel, welcher sich in axialer Richtung von der zweiten axialen Seite des Magnetankers und durch eine Bohrung in einem stationären Teil des Ventils hindurch erstreckt. Dabei ist in der Bohrung eine Dichtung angeordnet, welche das zweite Volumen abdichtet. Die zweite axiale Seite kann dabei insbesondere diejenige Seite des Magnetankers sein, welche beim Einschalten des Ventils in Bewegungsrichtung vorne liegt, mit anderen Worten, diejenige Seite des Magnetankers, welche das Volumen begrenzt, in dem sich ein Überdruck zum Abbremsen der Bewegung der beweglichen Baugruppe aufbaut, wie oben beschrieben. Um den Aufbau des Überdrucks und damit die Drosselwirkung zu verstärken, ist es vorteilhaft, dieses Volumen abzudichten. Diese Dichtung kann beispielsweise eine Dichthülse umfassen, in welcher der Stößel beweglich gelagert ist. Die Dichthülse kann in der Bohrung beweglich gelagert sein. Sie bildet mit dem Stößel einen sehr kleinen Spalt, so dass die gewünschte Drosselung erreicht wird. Es versteht sich, dass andere Dichtungen ebenso möglich sind, die in der Bohrung und/oder auf dem Stößel angeordnet sein können, wie beispielsweise eine oder mehrere Ringdichtungen.

Gemäß einer weiteren Ausgestaltung kann der Magnetanker zumindest eine Ausnehmung auf einer axialen Seite umfassen, wobei die Ausnehmung vorzugsweise mehr als ein Drittel, weiter vorzugsweise mehr als die Hälfte einer Querschnittsfläche des Magnetankers einnimmt. Durch Vorsehen einer derartigen Ausnehmung, mit anderen Worten einer teilweisen Aushöhlung des Magnetankers, kann das Gewicht des Magnetankers reduziert werden, was zur Verminderung der Stärke des Aufpralls und damit des Aufprallgeräuschs beiträgt. Obwohl durch die Ausnehmung im Magnetanker die Magnetkraft nicht stark beeinträchtigt wird, kann es vorteilhaft sein, die sogenannte Polstufe anzupassen, d.h. die Geometrie des Magnetankers in demjenigen Bereich, in dem der Magnetkreis vom stationären Teil des Ventils auf die bewegliche Baugruppe, insbesondere den Magnetanker, übergeht.

Zur weiteren Geräuschreduzierung können Dämpferelemente, insbesondere im Bereich eines Anschlags des Magnetankers vorgesehen werden, beispielsweise Dämpferelemente wie in dem Sitzventil aus DE 10 2011078102 A1.

Der Durchfluss durch das Ventil kann an einem Ende mindestens eine axiale Durchflussöffnung und an einem anderen Ende zum Beispiel mindestens eine radiale Durchflussöffnung aufweisen, wobei das Verschlusselement in der zweiten Position eine Abdichtung der mindestens einen axialen Durchflussöffnung bewirkt. Vorzugsweise handelt es sich bei dem Ventil um ein Sitzventil, aber die Erfindung lässt sich vorteilhaft auch auf andersartige Ventile anwenden, zum Beispiel Schieberventile. Ein einzelnes oder mehrere der vorbeschriebenen Ventile können vorteilhaft in einem Luftfedersystem eines Kraftfahrzeugs eingesetzt werden.

Nachfolgend wird die Erfindung beispielhaft anhand der anhängenden Figuren dargestellt. Darin zeigen:
Fig. 1 ein elektromagnetisch betätigtes Sitzventil gemäß einem bevorzugten Ausführungsbeispiel im geöffneten Zustand,
Fig. 1A einen vergrößerten Ausschnitt des Ventils aus Fig. 1,
Fig. 2 das Ventil aus Fig. 1 im gesperrten Zustand,
Fig. 2A wiederum einen vergrößerten Ausschnitt des Ventils aus Fig. 2,
Fig. 3 ein weiteres Ausführungsbeispiel eines Ventils,
Fig. 4 noch ein weiteres Ausführungsbeispiel eines Ventils,
Fig. 5A und 5B verschiedene Ansichten eines Drosselelements und
Fig. 6 ein weiteres Ausführungsbeispiel eines Drosselelements im Schnitt.

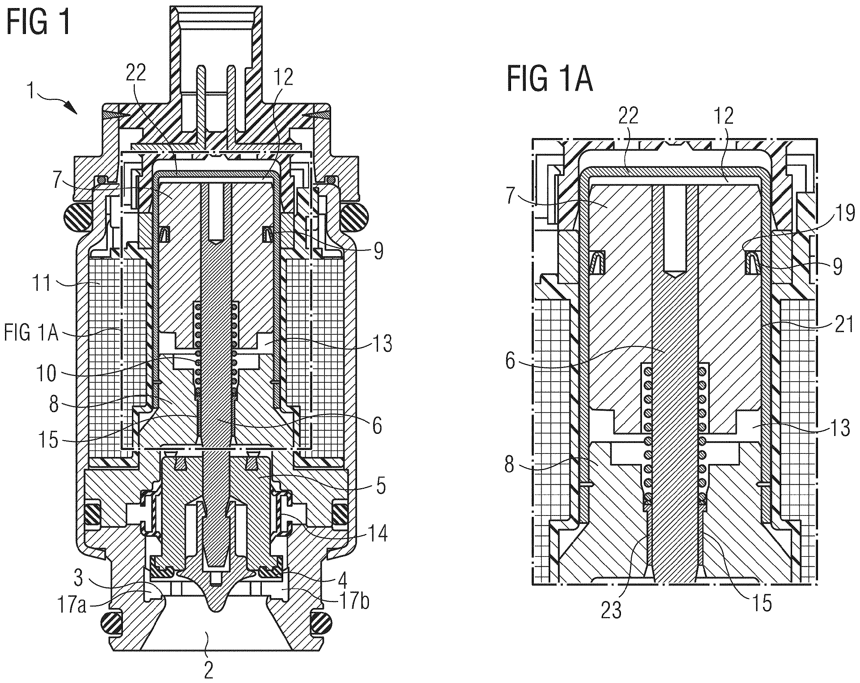

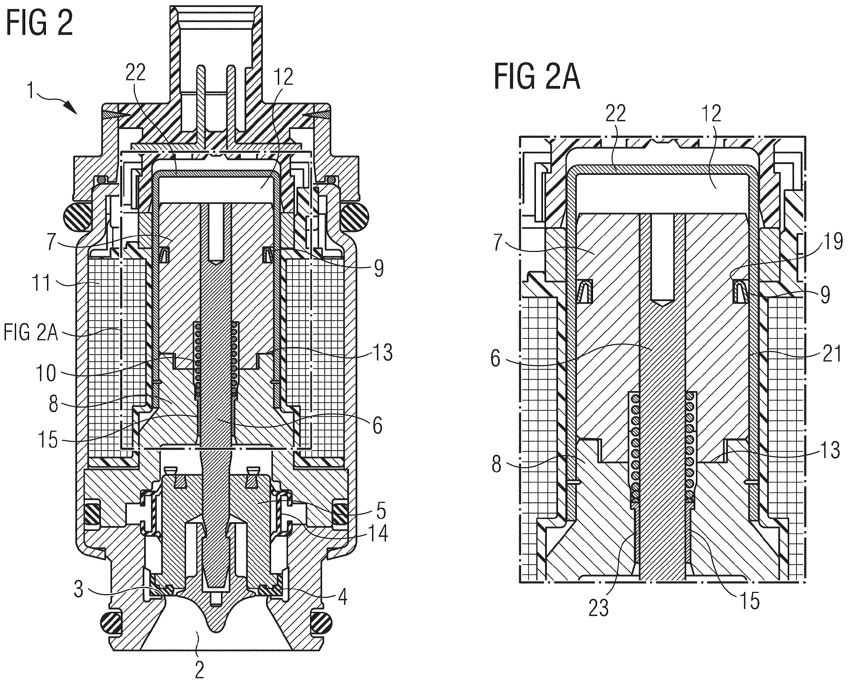

Das in Fig. 1 im geöffneten Zustand und in Fig. 2 im gesperrten Zustand dargestellte elektromagnetisch betätigte Schaltventil 1 besitzt eine Ventilöffnung 2 mit einem Dichtsitz 3, welches durch ein Dichtelement 4 verschließbar ist. Das Ventil 1 ist demnach als Sitzventil ausgebildet. Die Dichtfläche des Dichtelements 4 ist elastisch verformbar, um eine zuverlässige Abdichtung der axialen Durchflussöffnung 2 zu gewährleisten. Das Dichtelement 4 sitzt am vorderen axialen Ende eines Ventilelements 5, das über einen Stößel 6 mit einem beweglichen Magnetanker 7 gekoppelt ist. Es ist prinzipiell denkbar, das Dichtelement 4 unmittelbar am Magnetanker 7 zu befestigen. Im dargestellten Ausführungsbeispiel sitzt das Ventilelement 5 jedoch fest auf dem Stößel 6, welcher wiederum fest im Magnetanker 7 sitzt. Dadurch ergibt sich eine bewegliche Baugruppe bestehend aus dem Dichtelement 4, Ventilelement 5, Stößel 6 und Magnetanker 7. Das Ventilelement 5 und der Stößel 6 bzw. der Magnetanker 7 und der Stößel 6 sind dabei insbesondere miteinander verpresst. Dies erlaubt beim Montieren die Justage der Länge der beweglichen Baugruppe und des axialen Abstands des Magnetankers 7 zum Polteil 8. Das Ventilelement 5 ist mittels einer dynamischen Dichtung 14 axial verschieblich und abgedichtet gelagert. Der Stößel 6 läuft durch eine Bohrung 23 in dem Polteil 8.

Der bewegliche Magnetanker 7 ist Teil eines Eisenkreises, zu dem auch das ortsfeste Polteil 8 gehört. Der Magnetanker 7 ist axial verschieblich in einer Ventilhülse 22 gelagert, getrennt durch einen Spalt 21. Zwischen dem Magnetanker 7 und dem Polteil 8 liegt ein Volumen 13, das es dem Magnetanker 7 ermöglicht, sich axial in Richtung auf das Polteil 8 zuzubewegen, wenn das Dichtelement 4 in seine in Fig. 2 dargestellte Schließposition gebracht wird. Auf der axial entgegengesetzten Seite des Magnetankers 7 befindet sich ein Volumen 12, welches eine Bewegung des Magnetankers 7 von dem in Fig. 2 gezeigten gesperrten Zustand in den in Fig. 1 gezeigten geöffneten Zustand erlaubt. Die Volumina 12 und 13 werden von der Ventilhülse 22 begrenzt und sind durch den Spalt 21 miteinander verbunden, so dass bei einer axialen Bewegung des Magnetankers 7 Luft zwischen den beiden Volumina 12 und 13 ausgetauscht werden kann.

In der in Fig. 1 dargestellten geöffneten Schaltstellung des Ventils wird der Magnetanker 7 durch mechanische Belastung mittels eines Federelements 10 beabstandet zum Polteil 8 gehalten. Durch elektrische Bestromung einer den Magnetanker 7 und das Polteil 8 umgebenden Spule 11 wird ein den Magnetanker 7 und das Polteil 8 durchsetzender Magnetkreis in der Weise erzeugt, dass zwischen dem Polteil 8 und dem Magnetanker 7 eine magnetische Anziehungskraft wirkt, die der mechanischen Belastung des Federelements 10 entgegenwirkt und diese überwindet. Der Magnetanker 7 bewegt sich dann auf das Polteil 8 zu, so dass der Stößel 6 axial verschoben wird und das Dichtelement 4 den Dichtsitz 3 verschließt, so dass im gesperrten Zustand der Durchfluss zwischen radialen Durchflussöffnungen 17a, 17b und der axialen Durchflussöffnung 2 unterbunden wird.

Um eine kurze Schaltzeit insbesondere beim Schließen des Ventils zu erreichen, wird die bewegliche Baugruppe mit einer hohen Geschwindigkeit bewegt. Ein ungedämpfter Aufprall des Dichtelements 4 auf den Dichtsitz 3 würde dabei ein störendes Geräusch erzeugen, welches selbst durch Dämpferelemente (nicht gezeigt) beispielsweise zwischen dem Magnetanker 7 und dem Polteil 8 nicht vollständig vermieden werden kann. Üblicherweise bleibt zwischen dem Polteil 8 und dem Magnetanker 7 ein Minimum des Volumens 13 in Form eines Luftspalts (sog. Remanenzspalt) erhalten, so dass an dieser Stelle ein Aufprallgeräusch verhindert werden kann. Zusätzlich erhöht der Luftspalt den Strom, bei welchem das Ventil 1 öffnet, wodurch die Abschaltzeit reduziert wird. Kurze Schaltzeiten in Verbindung mit hohen Durchflussraten sind insbesondere beim Einsatz des Ventils 1 in einem Luftfedersystem eines Kraftfahrzeugs gewünscht.

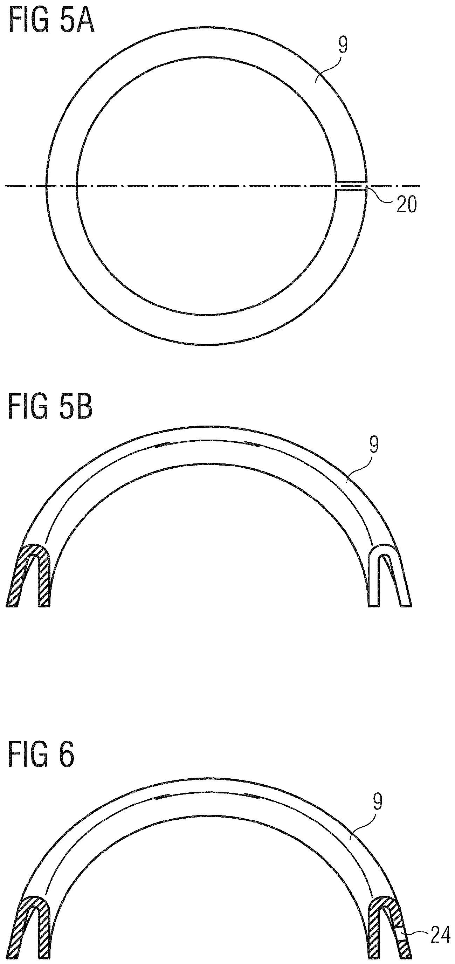

In dem Ventil 1 wird die Bewegung der beweglichen Baugruppe deshalb abgebremst und somit der Aufprall des Dichtelements 4 auf den Dichtsitz 3 abgeschwächt. Dazu ist ein Drosselelement 9 vorgesehen, welches den Austausch von Luft zwischen den beiden Volumina 12 und 13 drosselt. Das Drosselelement 9 ist insbesondere als V-Dichtung ausgebildet, d.h. ein Dichtring mit einem V-Profil, wie in Fig. 5A in einer Draufsicht und in Fig. 5B in einer perspektivischen Schnittzeichnung (Schnitt entlang der gestrichelten Linie in Fig. 5A) dargestellt. Bei einer Bestromung der Spule 11, d.h. beim Einschalten des Ventils 1, wird der Magnetanker 7 in Richtung des Polteils 8 entgegen der Kraft der Feder 10 bewegt.

Bei der Bewegung der beweglichen Baugruppe wird das Volumen 13 verkleinert und darin enthaltene Luft komprimiert (Überdruck) und gleichzeitig das Volumen 12 vergrößert und darin enthaltene Luft expandiert (Unterdruck). Dies führt zu einem Abbremsen des Magnetankers 7. Genauer gesagt führt dies zu einem schaltwegabhängigen Abbremsen, da der Widerstand durch die komprimierte Luft am Anfang der Bewegung klein ist und erst gegen Ende der Bewegung kurz vor dem Aufprall ein starkes Abbremsen verursacht. Auf diese Weise wird eine effektive Reduzierung des Aufprallgeräusches bei gleichzeitig unwesentlichem Anstieg des notwendigen Antriebstroms erreicht. Bei Stillstand der beweglichen Baugruppe findet dann ein Druckausgleich zwischen den Volumina 12 und 13 statt.

Um im Volumen 13 eine ausreichende Komprimierung der darin enthaltenen Luft zu erreichen und zu verhindern, dass die Luft durch die Bohrung 23 entlang des Stößels 6 entweicht, ist das Volumen 13 im Bereich des Stößels 6 abgedichtet. Dazu ist in der Bohrung 23 eine Dichthülse 15 eingesetzt. Die Dichthülse 15 verkleinert den Spalt zwischen dem Stößel 6 und dem Polteil 8 in der Bohrung 23. Der entstehende kleine Spalt zwischen der Dichthülse 15 und dem Stößel 6 verbessert die Drosselung und das Abbremsen der beweglichen Baugruppe, da das Volumen 13 dann beidseitig abgedichtet ist.

Beim Einschalten des Ventils 1 sorgt das Drosselelement 9 dafür, das ein Austausch von Luft von dem Volumen 13 in Richtung des Volumens 12 gedrosselt wird. Durch die Ausrichtung des V-Profils, d.h. die Öffnung des V-Profils in Richtung des Volumens 13, erfolgt eine elastische Verformung des Drosselelements 9 radial nach außen derart, dass sich das V-Profil bei einer axialen Bewegung des Magnetankers 7 in Richtung des Polteils 8 aufspreizt und gegen die innere Wand der Ventilhülse 22 anlegt. Dadurch wird die Dichtwirkung verstärkt.

Um die Drosselwirkung zu verringern, d.h. den Durchfluss von Luft durch das Drosselelement 9 zu erhöhen, weist das Drosselelement 9 einen Schlitz 20 auf (Fig. 5A). Gleichzeitig erlaubt der Schlitz 20 eine einfache Montage des ansonsten ringförmigen Drosselelements 9 in der Nut 19 des Magnetankers 7. Es können auch mehrere Schlitze und/oder eine oder mehrere andere Durchgangsöffnungen in dem Drosselelement 9 oder auch in dem Magnetanker 7 und/oder dem Stößel 6 vorgesehen sein, welche einen Austausch von Luft zwischen den beiden Volumina 12 und 13 erlauben. Beispielsweise ist ein Fig. 6 ein Drosselelement 9 mit einem Loch 24 anstatt eines Schlitzes dargestellt, welches sich durch das Drosselelement 9 hindurch erstreckt, um einen Austausch von Luft durch das Drosselelement 9 hindurch zu erlauben. Durch Vorsehen eines Schlitzes 20 oder einer anderen Durchgangsöffnung 24 kann die Drosselwirkung und damit das Abbremsen der beweglichen Baugruppe eingestellt werden.

In der entgegengesetzten Bewegungsrichtung, d.h. beim Ausschalten des Ventils 1, wobei die bewegliche Baugruppe mittels der Kraft der Feder 10 in die in Fig. 1 gezeigte Position bewegt wird, wird das V-Profil des Drosselelements 9 zusammengedrückt, so dass eine gegenüber dem Einschalten reduzierte Drosselwirkung oder keine Drosselwirkung erzeugt wird. Aufgrund der geringeren Bewegungsgeschwindigkeit der beweglichen Baugruppe ist beim Ausschalten ein Abbremsen auch nicht unbedingt nötig.

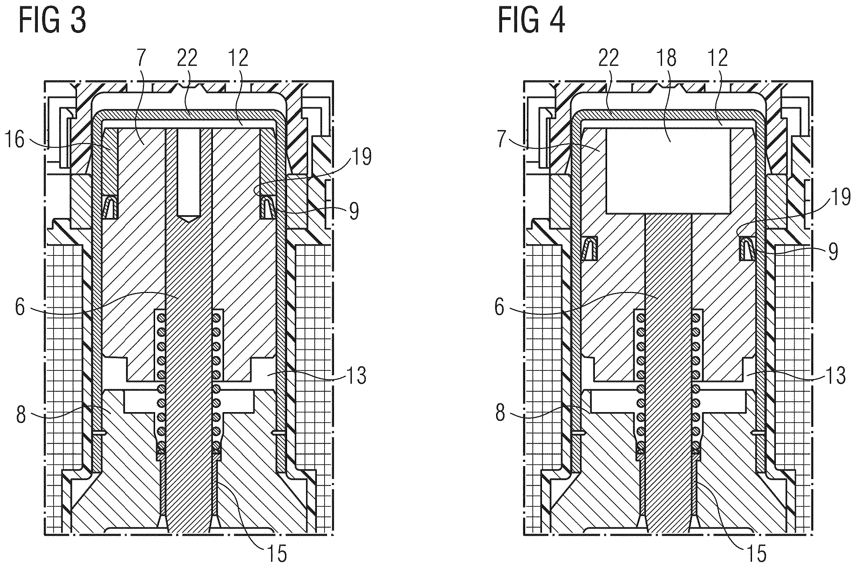

In Fig. 3 ist ein weiteres Ausführungsbeispiel eines Ventils 1 gezeigt, welches im Wesentlichen dem zuvor beschriebenen Ventil 1 gleicht. Um die Montage des Dichtrings 9 zu erleichtern, ist der Magnetanker 7 jedoch zweiteilig ausgebildet. Nach Einsetzen des Dichtrings 9 wird ein ringförmiges Bauteil 16 mit dem Körper des Magnetankers 7 verbunden, wodurch die zunächst in axialer Richtung offene Nut 19 geschlossen wird. Ein Schlitzen des Dichtrings 9 kann so entfallen. Aus den oben genannten Gründen hinsichtlich der Drosselwirkung kann das Vorsehen eines Schlitzes 20 oder eines anderen Durchgangs, welcher die beiden Volumina 12 und 13 miteinander verbindet, jedoch trotzdem vorteilhaft sein.

In Fig. 4 ist noch ein weiteres Ausführungsbeispiel eines Ventils 1 gezeigt, welches ebenfalls im Wesentlichen dem oben beschriebenen Ventil gleicht. Im Unterschied zu dem oben beschriebenen Ventil 1 weist der Magnetanker 7 des Ventils 1 aus Fig. 4 eine Ausnehmung 18 auf. Diese kann vorgesehen werden, da in diesem Bereich des Magnetankers 7 ohnehin kaum magnetischer Fluss vorhanden ist.

Zum Ausgleich der Magnetkurve im Vergleich zu einem Magnetanker ohne diese Ausnehmung ist die Polstufe, d.h. die Geometrie an dem dem Polteil 8 zugewandten Ende des Magnetankers 7, angepasst. Die Ausnehmung 18 reduziert das Gewicht des Magnetankers 7, was zu einer Reduzierung der Stärke des Aufpralls des Magnetankers 7 auf das Polteil 8 beim Einschalten des Ventils 1 und somit zu einer Reduzierung des Geräuschs weiter beiträgt.

## Patentansprüche

1. Elektrisch oder elektromagnetisch betätigtes Ventil (1), umfassend
- eine bewegliche Baugruppe mit einem Magnetanker (7), welche entlang einer Achse zwischen einer ersten und einer zweiten Position beweglich ist, wobei in der ersten Position mindestens ein Durchgang (2, 17a, 17b) durch das Ventil (1) zumindest teilweise offen ist, der in der zweiten Position geschlossen ist,
- eine Ventilhülse (22), welche den Magnetanker (7) umgibt und in welcher der Magnetanker (7) zwischen der ersten und der zweiten Position beweglich ist,
wobei der Magnetanker (7) in der Ventilhülse (22) ein erstes Volumen (12) auf einer ersten axialen Seite des Magnetankers (7) und ein zweites Volumen (13) auf einer der ersten axialen Seite gegenüberliegenden zweiten axialen Seite des Magnetankers (7) definiert, und
- ein in radialer Richtung elastisches Drosselelement (9), das derart zwischen dem ersten Volumen (12) und dem zweiten Volumen (13) angeordnet ist, dass es bei axialer Bewegung der beweglichen Baugruppe einen Fluidstrom zwischen dem ersten Volumen (12) und dem zweiten Volumen (13) drosselt,
**dadurch gekennzeichnet, dass** die bewegliche Baugruppe einen Stößel (6) umfasst, welcher sich in axialer Richtung von der zweiten axialen Seite des Magnetankers (7) und durch eine Bohrung (23) in einem stationären Teil (8) des Ventils (1) hindurch erstreckt, wobei in der Bohrung (23) eine Dichtung (15) angeordnet ist, welche das zweite Volumen (13) abdichtet.

2. Ventil nach Anspruch 1, wobei das Drosselelement (9) zumindest eine umlaufende Dichtung in einem Spalt (21) zwischen dem Magnetanker (7) und der Ventilhülse (22) umfasst.

3. Ventil nach Anspruch 2, wobei das Drosselelement (9) entlang eines Umfangs des Magnetankers (7) angeordnet ist.

4. Ventil nach einem der Ansprüche 1 bis 3, wobei zumindest ein Durchgang (20) vorgesehen ist, welcher bei axialer Bewegung der beweglichen Baugruppe einen Fluidstrom zwischen dem ersten und zweiten Volumen (12, 13) erlaubt.

5. Ventil nach Anspruch 4, wobei der Durchgang (20) in dem Drosselelement (9) angeordnet ist.

6. Ventil nach einem der Ansprüche 1 bis 5, wobei das Drosselelement (9) derart angeordnet und ausgebildet ist, dass es bei Bewegung der beweglichen Baugruppe in einer ersten axialen Richtung eine größere Drosselwirkung entfaltet als bei einer Bewegung der beweglichen Baugruppe in einer der ersten axialen Richtung entgegengesetzten zweiten axialen Richtung.

7. Ventil nach Anspruch 6, wobei das Drosselelement (9) bei einer Bewegung in der zweiten axialen Richtung eine Drosselwirkung entfaltet, die weniger als 10% der Drosselwirkung bei einer Bewegung der beweglichen Baugruppe in der der ersten axialen Richtung beträgt.

8. Ventil nach Anspruch 7, wobei das Drosselelement (9) bei einer Bewegung in der zweiten axialen Richtung im Wesentlichen keine Drosselwirkung entfaltet.

9. Ventil nach einem der Ansprüche 1 bis 8, wobei das Drosselelement (9) zumindest eine Dichtlippe umfasst.

10. Ventil nach Anspruch 9, wobei die Dichtlippe ein V-Profil aufweist, welches in einer axialen Richtung geöffnet ist.

11. Ventil nach Anspruch 9 oder 10, wobei die Dichtlippe derart angeordnet ist, dass sie sich bei einer durch eine Bestromung des Ventils erzeugten axialen Bewegung der beweglichen Baugruppe aufspreizt.

12. Ventil nach einem der Ansprüche 1 bis 11, wobei die Dichtung eine Dichthülse (15) umfasst, in welcher der Stößel (6) axial beweglich gelagert ist.

13. Ventil nach einem der Ansprüche 1 bis 12, wobei der Magnetanker (7) zumindest eine Ausnehmung (18) auf einer axialen Seite umfasst, welche mehr als ein Drittel einer Querschnittsfläche des Magnetankers (7) einnimmt.

14. Ventil nach Anspruch 13, wobei die Ausnehmung (18) mehr als die Hälfte der Querschnittsfläche des Magnetankers (7) einnimmt.

15. Luftfedersystem eines Kraftfahrzeugs, umfassend ein oder mehrere elektrisch oder elektromagnetisch betätigte Ventile (1) nach einem der Ansprüche 1 bis 14.

## Claims

1. An electrically or electromagnetically operated valve (1), comprising
- a movable structural group with a magnetic armature (7), which is movable along an axis between a first and a second position, wherein in the first position at least one passage (2, 17a, 17b) through the valve (1) is at least partially open, which passage is closed in the second position, and
- a valve sleeve (22) which surrounds the magnetic armature (7) and in which the magnetic armature (7) is movable between the first and the second position,
wherein the magnetic armature (7) defines in the valve sleeve (22) a first volume (12) on a first axial side of the magnetic armature (7) and a second volume (13) on a second axial side of the magnetic armature (7) opposing the first axial side, and
a throttling element (9) elastic in the radial direction, which is arranged between the first volume (12) and the second volume (13) such that upon axial movement of the movable structural group it throttles a fluid stream between the first volume (12) and the second volume (13),
**characterized in that** the movable structural group comprises a plunger (6) which extends in the axial direction from the second axial side of the magnetic armature (7) and through a bore (23) in a stationary part (8) of the valve (1), wherein in the bore (23) there is arranged a seal (15) which seals the second volume (13).

2. The valve according to claim 1, wherein the throttling element (9) comprises at least one circumferential seal in a gap (21) between the magnetic armature (7) and the valve sleeve (22).

3. The valve according to claim 2, wherein the throttling element (9) is arranged along a circumference of the magnetic armature (7).

4. The valve according to any of claims 1 to 3, wherein at least one passage (20) is provided which upon axial movement of the movable structural group allows a fluid stream between the first and second volume (12,13).

5. The valve according to claim 4, wherein the passage (20) is arranged in the throttling element (9).

6. The valve according to any of claims 1 to 5, wherein the throttling element (9) is arranged and configured such that upon movement of the movable structural group in a first axial direction it develops a higher throttling effect than upon a movement of the movable structural group in a second axial direction opposing the first axial direction.

7. The valve according to claim 6, wherein the throttling element (9) upon a movement in the second axial direction develops a throttling effect which is less than 10% of the throttling effect upon a movement of the movable structural group in the first moving direction.

8. The valve according to claim 7, wherein the throttling element (9) upon a movement in the second axial direction develops substantially no throttling effect

9. The valve according to any of claims 1 to 8, wherein the throttling element (9) comprises at least one sealing lip.

10. The valve according to claim 9, wherein the sealing lip has a V-profile which is open in an axial direction.

11. The valve according to claim 9 or 10, wherein the sealing lip is arranged such that it spreads open upon an axial movement of the movable structural group produced by energizing the valve.

12. The valve according to any of claims 1 to 11, wherein the seal comprises a sealing sleeve (15) in which the plunger (6) is mounted to be axially movable.

13. The valve according to any of claims 1 to 12, wherein the magnetic armature (7) comprises at least one recess (18) on an axial side, wherein the recess (18) occupies more than a third of a cross-sectional area of the magnetic armature (7).

14. The valve according to claim 13, wherein the recess (18) occupies more than half of a cross-sectional area of the magnetic armature (7).

15. An air suspension system of an automobile, comprising one or more electrically or electromagnetically operated valves (1) according to any of claims 1 to 14.

## Revendications

1. Vanne (1) actionnée électriquement ou électromagnétiquement, comprenant
- un ensemble déplaçable ayant une armature d'aimant (7) qui est déplaçable le long d'un axe entre une première et une deuxième position, cependant que, dans la première position, au moins un passage (2, 17a, 17b) à travers la vanne (1) est au moins partiellement ouvert, lequel est fermé dans la deuxième position,
- une douille de vanne (22) entourant l'armature d'aimant (7) et dans laquelle l'armature d'aimant (7) est déplaçable entre la première et la deuxième position,
- cependant que l'armature d'aimant (7) définit dans la douille de vanne (22) un premier volume (12) sur un premier côté axial de l'armature d'aimant (7) et un deuxième volume (13) sur un deuxième côté axial opposé au premier côté axial, de l'armature d'aimant (7), et
- un élément d'étranglement (9) élastique en direction radiale, lequel est agencé de telle façon entre le premier volume (12) et le deuxième volume (13) que, lors de déplacement axial de l'ensemble déplaçable, il étrangle un flux de fluide entre le premier volume (12) et le deuxième volume (13),
**caractérisé en ce que** l'ensemble déplaçable comprend un poussoir (6) qui s'étend en direction axiale depuis le deuxième côté axial de l'armature d'aimant (7) et à travers un alésage (23) dans une partie fixe (8) de la vanne (1), cependant que, dans l'alésage (23), un joint d'étanchéité (15) est agencé, lequel étanchéifie le deuxième volume (13).

2. Vanne selon la revendication 1, cependant que l'élément d'étranglement (9) comprend au moins un joint d'étanchéité sur tout son pourtour dans une fente (21) entre l'armature d'aimant (7) et la douille de vanne (22).

3. Vanne selon la revendication 2, cependant que l'élément d'étranglement (9) est agencé le long d'une périphérie de l'armature d'aimant (7).

4. Vanne selon une des revendications de 1 à 3, cependant qu'au moins un passage (20) est prévu, lequel, lors de déplacement axial de l'ensemble déplaçable, permet un flux de fluide entre le premier et le deuxième volume (12, 13).

5. Vanne selon la revendication 4, cependant que le passage (20) est agencé dans l'élément d'étranglement (9).

6. Vanne selon une des revendications de 1 à 5, cependant que l'élément d'étranglement (9) est agencé et réalisé de telle façon que, lors de déplacement de l'ensemble déplaçable dans une première direction axiale, un plus grand effet d'étranglement est déployé que lors d'un déplacement de l'ensemble déplaçable dans une deuxième direction axiale opposée à la première direction axiale.

7. Vanne selon la revendication 6, cependant que l'élément d'étranglement (9) déploie lors d'un déplacement dans la deuxième direction axiale un effet d'étranglement qui correspond à moins de 10 % de l'effet d'étranglement lors d'un déplacement de l'ensemble déplaçable dans la première direction axiale.

8. Vanne selon la revendication 7, cependant que l'élément d'étranglement (9) ne déploie lors d'un déplacement dans la deuxième direction axiale essentiellement aucun effet d'étranglement.

9. Vanne selon une des revendications de 1 à 8, cependant que l'élément d'étranglement (9) comprend au moins une lèvre d'étanchéité.

10. Vanne selon la revendication 9, cependant que la lèvre d'étanchéité présente un profil en V, lequel est ouvert dans une direction axiale.

11. Vanne selon la revendication 9 ou 10, cependant que la lèvre d'étanchéité est agencée de telle façon que, lors d'un déplacement axial, de l'ensemble déplaçable, généré par une alimentation en courant de la vanne, elle s'écarte.

12. Vanne selon une des revendications de 1 à 11, cependant que le joint d'étanchéité comprend une douille d'étanchéité (15) dans laquelle le poussoir (6) est logé de façon axialement déplaçable.

13. Vanne selon une des revendications de 1 à 12, cependant que l'armature d'aimant (7) comprend au moins un évidement (18) sur un côté axial, lequel occupe plus d'un tiers d'une surface de section transversale de l'armature d'aimant (7).

14. Vanne selon la revendication 13, cependant que l'évidement (18) occupe plus de la moitié de la surface de section transversale de l'armature d'aimant (7).

15. Système de suspension pneumatique d'un véhicule automobile, comprenant une ou plusieurs vannes (1) actionnées électriquement ou électromagnétiquement selon une des revendications de 1 à 14.
